## Europäisches Patentamt

## European Patent Office

## Office européen des brevets

(19)

(11) Veröffentlichungsnummer: **0 023 562**
**B1**

(12) **EUROPÄISCHE PATENTSCHRIFT**

(45) Veröffentlichungstag der Patentschrift:
**12.01.83**

(51) Int. Cl.³: **H 04 B 7/26,** H 04 B 7/005

(21) Anmeldenummer: **80103467.9**

(22) Anmeldetag: **21.06.80**

(54) **Gleichwellenfunknetz.**

(30) Priorität: **07.08.79 DE 2931923**

(43) Veröffentlichungstag der Anmeldung:
**11.02.81 Patentblatt 81/6**

(45) Bekanntmachung des Hinweises auf die Patenterteilung:
**12.01.83 Patentblatt 83/2**

(84) Benannte Vertragsstaaten:
**AT BE CH GB LI LU NL**

(56) Entgegenhaltungen:
**EP-A-0 020 893**
**DE-A-1 466 214**
**DE-A-2 612 476**
**US-A-3 151 295**

(73) Patentinhaber: **Licentia Patent-Verwaltungs-GmbH,
Theodor-Stern-Kai 1, D-6000 Frankfurt/Main 70 (DE)**

(72) Erfinder: **Bürk, Hans, Ing. grad., Buchenweg 1,
D-7915 Unterelchingen (DE)**
Erfinder: **Hipp, Hartmut, Dipl.-Ing., Römerhalde 2,
D-7901 Staig (DE)**
Erfinder: **Plischke, Alfred, Ing. grad., Lindenweg 11,
D-7915 Oberelchingen (DE)**

(74) Vertreter: **Schickle, Gerhard, Dipl.-Ing. et al, Licentia
Patent-Verwaltungs-GmbH Theodor-Stern-Kai 1,
D-6000 Frankfurt/Main 70 (DE)**

ACTORUM AG

Gleichwellenfunknetz

Die Erfindung betrifft ein Funknetz nach dem Oberbegriff des Anspruchs 1.

Gleichwellenfunknetz dieser Art sind bekannt, z.B. aus der DE-OS 26 45 901.

In der älteren EP-A1-20 893 ist bereits ein Gleichwellenfunknetz vorgeschlagen worden, zum Herstellen von Funkverbindungen über ortsfeste Relaisstationen. Dieses Funknetz umfasst mindestens zwei ortsfeste Relaisstationen mit je einem Duplex-Funkgerät, das auf einem ersten Funkkanal sendet und empfängt, und mit je einem zweiten Funkgerät, über das auf einem zweiten Funkkanal der Funkverkehr zwischen den Relaisstationen bzw. mit einer zusätzlichen ortsfesten Relaisstation aufgenommen werden kann. Zu jeder Relaisstation gehört eine Relais-Diversity-Einrichtung, die die Empfangsqualität der eigenen Relaisstation mit der Empfangsqualität der anderen Relaisstationen vergleicht. Die Relaisstation mit dem besten Empfangssignal sendet dann allein auf dem zweiten Funkkanal, während die entsprechenden Sender der übrigen Relaisstationen stillgelegt werden. Dieses Funknetz hat den Nachteil, dass die Ermittlung der Relaisstation mit den besten Empfangsverhältnissen zeitraubend ist. Ausserdem ist es nicht möglich, bei schwankenden Empfangsverhältnissen während einer bestehenden Verbindung auf die dann jeweils beste Relaisstation umzuschalten.

Aus der DE-A-1 466 214 ist ein Funkfernsprechsystem bekannt, bei welchem Unterstationen (vorzugsweise mobile Teilnehmer) sendeseitig mit einstellbaren Dämpfungsgliedern versehen sind. Eine Relaisstation sendet Kontrollsignale aus, die von den Unterstationen empfangen werden und gemäss denen die Dämpfungsglieder derart eingestellt werden, dass in der Relaisstelle eine gewünschte Empfangsspannung anfällt.

Aufgabe der Erfindung ist es, ein Gleichwellenfunknetz zu schaffen, das ohne Empfängerauswahlautomatik in der Leitstelle auskommt.

Die Aufgabe wird gelöst durch die im Kennzeichen des Anspruchs 1 angegebenen Merkmale. Das Funknetz gemäss der Erfindung ist besonders kostengünstig und in höchstem Masse frequenzsparend, da es keine zusätzliche Frequenz für die Verbindung zur Leitstelle benötigt. Besonders vorteilhaft ist auch, dass für die Verbindung zu den Relaisstellen (Sende-Empfangsanlagen) keine Drahtleitungen benutzt werden, und dass keine Empfängerauswahl erforderlich ist. Drahtleitungen sind sehr teuer.

In einem Funknetz nach Anspruch 1 mit sogenannten «kleinen Relaisstellen» müssen Funkgespräche in der Betriebsart «bedingtes Gegensprechen» abgewickelt werden.

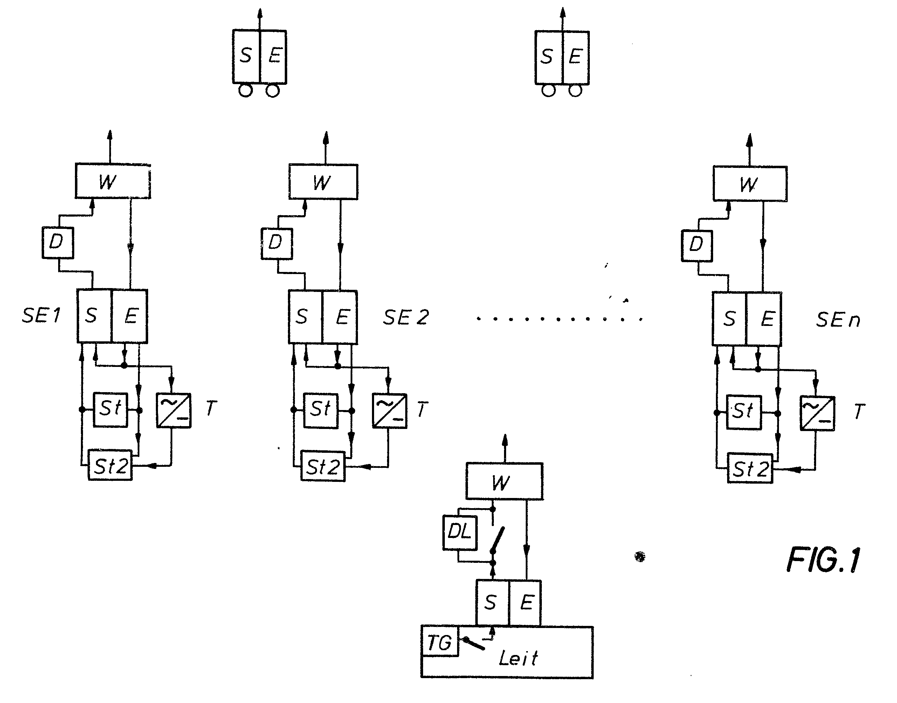

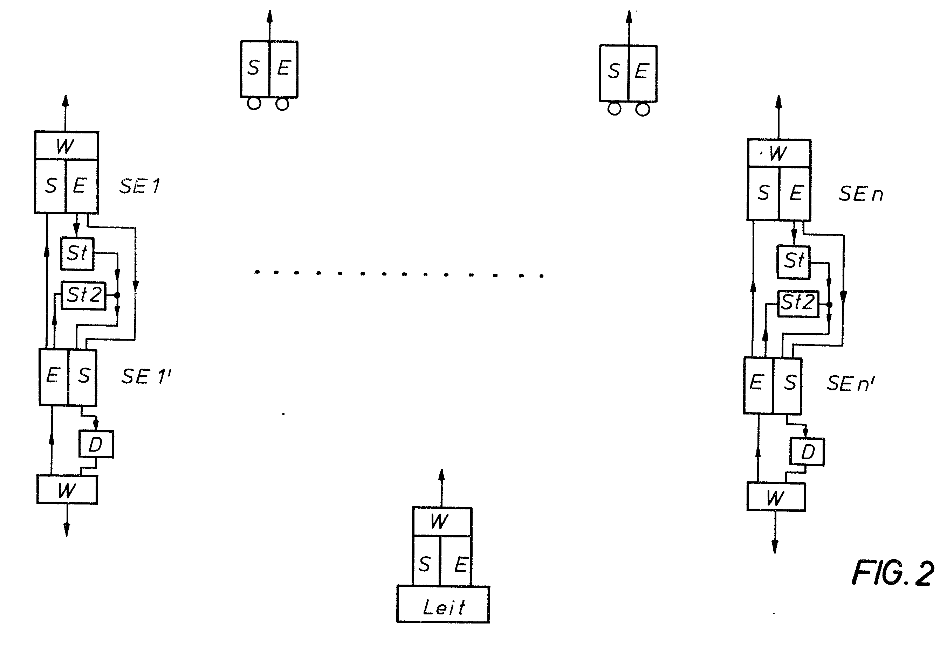

Gespräche dieser Art können nicht in das Telefonnetz vermittelt werden. Das Funknetz nach Anspruch 2 enthält die Erweiterung in Form von «grossen Relaisstellen». Damit ist zwischen Unterstation, z.B. Fahrzeugen, und Leitstelle unter Verwendung eines weiteren Duplexfrequenzpaares volles Gegensprechen möglich. Die beiden Möglichkeiten sind in Fig. 1 bzw. Fig. 2 in vorteilhafter Ausführung dargestellt und werden im folgenden näher erläutert.

Das Wesentliche an der Erfindung ist die von der Empfangsspannung aus der Verbindung Unterstation – Relaisstelle abhängige Dosierung der Sendeleistung für die Verbindung zur Leitstelle. Auf diese Weise ist es möglich, eine Empfängerauswahl auf dem HF-Wege zu realisieren. Voraussetzung dafür ist natürlich eine gute Verbindung zwischen der Leitstelle und den Relaisstellen. Das ist aber wegen der bevorzugten Positionierung dieser Stellen auf funkgeographisch günstigen Standorten im allgemeinen möglich. Es muss nämlich sichergestellt sein, dass der für die Steuerung der HF-Empfängerauswahl erforderliche Pegelspielraum gegeben ist. Bei einem Systemwert von ca. 145 dB (bei 6 Watt Leistung und 1μV Empfindlichkeit) darf eine Streckendämpfung von ca. 125 dB (entspricht etwa 20 km Entfernung, Sichtweite) nicht überschritten werden. Die Pegelsteuerung der Sendeleistung zur Leitstelle durch die Steuerschaltung St kann in Stufen oder kontinuierlich erfolgen.

Die Funktion der HF-Empfängerauswahl, also die Unterdrückung zu schwacher HF-Signale durch starke HF-Signale, kann auch bereits durch einen Pegelsprung von ca. 15 dB sichergestellt werden.

Bei Funknetzen der beschriebenen Art, besonders bei den BOS, wird auch die sogenannte WzW-Schaltung verlangt (Wagen-zu-Wagen).

Bei der Lösung nach Anspruch 1, entsprechend Fig. 1, wird automatisch das in einer Relaisstelle von einem Fahrzeug empfangene Signal wieder abgestrahlt. Befindet sich aber das zweite am WzW-Verkehr beteiligte Fahrzeug im Versorgungsbereich einer anderen Relaisstelle als das erste, dann muss die Signalübermittlung von der ersten Relaisstelle über die Leitstelle zur zweiten Relaisstelle erfolgen. Zu diesem Zweck muss in der Zentrale entweder eine vom Bedienungspersonal manuell schaltbare, oder eine ständige Signalbrücke vom Empfängerausgang zum Sendereingang geschaltet sein. Gleichzeitig muss in die Leitung vom Sender zur Frequenzweiche der Leitstellenanlage ein Dämpfungswiderstand DL eingeschaltet werden, so dass die WzW-Teilnehmer auf dem Relaisstellenempfänger mit überwiegend höherer Feldstärke einfallen als der Leitstellensender. Auf diese Weise wird durch den bei FM und PM wirksamen HF-Unterdrückungseffekt WzW-Betrieb zwar nicht lückenlos, aber über einen grossen Flächenanteil des durch das Gleichwellennetz abgedeckten Gebietes möglich sein.

Es ist dabei für Sprechverbindungen von erträglichem Nachteil, dass im Überdeckungsbereich zwischen den beiden beteiligten Relaisstellen Gleichwellenstörungen durch Laufzeitunterschiede auftreten. Die Laufzeitunterschiede entstehen, weil der Sender der zweiten Relaisstelle über einen längeren NF-Weg, nämlich über die Leitstelle, angesteuert wird als der Sender der ersten Relaisstelle. Für einen Funkbetrieb mit Datenübertragung kann sich dieser Laufzeitunterschied störend bemerkbar machen.

Bei der Lösung nach Anspruch 2, entsprechend Fig. 2, wird das Empfangssignal eines jeden Empfängers der Anlagen SE1 ... SEn zunächst zur Leitstelle geleitet. Dort kann jetzt wieder manuell oder automatisch durch Rufauswertung das Empfangssignal auf den Sender aufgeschaltet werden und damit an die Relaisstellen übermittelt werden. Die Laufzeiten sind so für die NF-Wege zu allen Relaisstellensendern der Anlagen SE1 ... SEn angenähert gleich gross und es treten zwischen den Versorgungsbereichen der Relaisstellen somit keine Verwirrungszonen auf.

Geringe Laufzeitunterschiede, die durch unterschiedliche Entfernungen der Relaisstellen zur Leitstelle entstehen, können in den Relaisstellen im NF-Weg, jeweils zwischen Empfänger und Sender, in beiden Richtungen durch Laufzeitnachbildungen in bekannter Weise ausgeglichen werden.

Eine vorteilhafte Weiterbildung der Erfindung ist die Auswertung des Empfangspegels des von der Leitstelle gesendeten Signals in den Relaisstellen zur Voreinstellung der Sendeleistung in Richtung Leitstelle bzw. des Dämpfungsgliedes D. Die Positionierung von Leitstelle und Relaisstellen wird für solche Funknetze im allgemeinen nach funkgeographisch vorteilhaften Gesichtspunkten ausgewählt, so dass die Verbindungswege gewöhnlich über freie Sicht verlaufen. Ausbreitungsstörungen treten aber, bei Verwendung von Meter- und Dezimeterwellen als Trägerfrequenz, bereits durch Reflexionen am Erdboden auf, wodurch die Empfangsspannung örtlich um 10 bis 15 dB schwanken kann. Die örtlichen Schwankungen können durch Veränderungen in der Umwelt (Schneelage, Gebäude, Fahrzeuge etc.) aber auch als zeitliche Schwankungen auftreten. Um zu vermeiden, dass durch solche Veränderungen die empfangsspannungsabhängige Empfängerauswahl nicht mehr richtig arbeitet, soll die Sendeleistung in den Relaisstellen für die Verbindung zur Leitstelle voreingestellt werden.

Bei einem Funknetz nach Anspruch 1 ist dies beispielsweise so einzurichten, dass durch in grösseren Zeitabständen stattfindende gezielte Aussendungen der Leitstelle an jede einzelne Relaisstelle die Sendeleistung der jeweiligen Relaisstelle korrigiert wird mittels einer Steuerschaltung St2, Fig. 1.

Diese zweite Steuerschaltung St2 wird nur aktiviert, wenn ein Tonrufumsetzer T anspricht. Die Leitstelle weist einen Tongenerator TG auf, der n Tonrufsignale abgibt zum selektiven Aufruf der Relaisstellen SE1 ... SEn.

Die Sendeleistung der Relaisstelle wird etwa umgekehrt proportional der von der Leitstelle einfallenden Empfangsleistung korrigiert. Bei grosser Empfangsspannung von der Leitstelle, das entspricht geringer Streckendämpfung, wird eine kleine Sendeleistung voreingestellt und bei kleiner Empfangsspannung entsprechend grosser Streckendämpfung wird eine grosse Sendeleistung voreingestellt. Auf diese Weise wird eine Grundeinstellung vorgenommen, die sicherstellt, dass bei unterschiedlichen Streckendämpfungen in der Leitstelle von jeder Relaisstelle bei voller Sendeleistung die gleiche Empfangsspannung ankommt.

Auf diesen in der Relaisstelle durch die Grundeinstellung mittels St2 festgelegten Wert wird nun die empfangsproportionale Leistungsregelung mittels St aufgebaut, die über den HF-Unterdrückungseffekt die Empfängerauswahl in der Leitstelle bewirken soll.

Bei einem Funknetz nach Anspruch 2 wird von den Empfängern der Sende-Empfangsanlagen SE1' ... SEn' bei jeder Aussendung der Leitstelle die Empfangsspannung gemessen. Abhängig von deren Höhe wird ein Steuersignal gebildet, das die im Mittelwert fest einstellbare Sendeleistung kontinuierlich oder in Stufen umgekehrt proportional zur Empfängereingangsleistung verändert.

Diese aus Richtung Leitstelle empfangsabhängige Leistungsregelung ist der aus Richtung Unterstation empfangsabhängigen Regelung in Reihe geschaltet.

**Patentansprüche**

1. Funknetz mit einer Leitstelle (Leit) und mit Unterstationen, sowie mit zwei oder mehr Sende-Empfangsanlagen (kleine Relaisstellen) (SE1 ... SEn), deren Sender auf gleicher oder angenähert gleicher Frequenz senden und deren Empfänger eine zweite Frequenz empfangen, das demodulierte Empfangssignal dem Sender als Modulation zuführen und den Sender abhängig von der Empfangsspannung tasten, gekennzeichnet durch, dass in den Sende-Empfangsanlagen (SE1 ... SEn) eine Steuerschaltung (St) die Sendeleistung derart steuert, dass bei hohem Empfangspegel eine grosse und bei niedrigem Empfangspegel eine kleine Sendeleistung abgestrahlt wird, dass ferner in die Verbindungsleitungen vom Sender (S) zur Frequenzweiche (W) einstellbare Dämpfungsglieder (D) eingebaut sind, mit welchen eine der durch Messungen ermittelten Streckendämpfung in Richtung Leitstelle (Leit) umgekehrt proportionale Dämpfung eingestellt wird, derart, dass bei voller Sendeleistung im Empfänger der Leitstelle (Leit) von allen Relaisstellen eine etwa gleich grosse Empfangsspannung anfällt (Fig. 1.

2. Funknetz mit einer Leitstelle (Leit) und mit Unterstationen, sowie mit mehreren ersten und zweiten Sende-Empfangsanlagen, die zu sogenannten «grossen Relaisstellen» (SE1 ... SEn, SE1' ... SEn') geschaltet sind, wobei die ersten Sende-Empfangsanlagen (SE1 ... SEn) für die Verbindung zu den Unterstationen auf einem einzigen Duplexfrequenzpaar im Gleichwellenbetrieb arbeiten, die zweiten Sende-Empfangsanlagen (SE' ... SEn') für die Verbindung zur Leitstelle (Leit) auf einem weiteren einzigen Duplexfrequenzpaar im Gleichwellenbetrieb arbeiten, wobei die Empfänger der ersten Sende-Empfangsanlagen (SE1 ... SEn) das demodulierte Empfangssignal dem jeweiligen Sender der zweiten Sende-Empfangsanlagen (SE1' ... SEn') als Modulation zuführen und die Sender abhängig von der Empfangsspannung tasten, sowie die Empfänger der zweiten Sende-Empfangsanlagen (SE1' ... SEn') in gleicher Weise die Sender der ersten Sende-Empfangsanlagen (SE1 ... SEn) tasten, dadurch gekennzeichnet, dass die Empfänger der ersten Sende-Empfangsanlagen (SE1 ... SEn) über eine Steuerschaltung (St) die Sender der zweiten Sende-Empfangsanlagen (SE1' ... SEn') abhängig von ihrem Empfangspegel derart steuern, dass eine kleine Empfangsspannung eine kleine und eine grosse Empfangsspannung eine grosse Sendeleistung ergibt, ferner, dass zwischen den Sendern der zweiten Sende-Empfangsanlagen (SE1' ... SEn') und den zugehörigen Weichen (W) Dämpfungsglieder (D) eingebaut sind, mit welchen eine der durch Messungen ermittelten Streckendämpfung in Richtung Leitstelle (Leit) umgekehrt proportionale Dämpfung eingestellt wird, derart, dass bei voller Sendeleistung im Empfänger der Leitstelle (Leit) von allen Relaisstellen eine etwa gleich grosse Empfangsspannung anfällt (Fig. 2).

3. Funknetz nach Anspruch 1, dadurch gekennzeichnet, dass in der Leitstelle zwischen Sender und Weiche ein überbrückbares Dämpfungsglied (DL) geschaltet ist (Fig. 1).

4. Funknetz nach Anspruch 1 oder 2, dadurch gekennzeichnet, dass eine zweite Steuerschaltung eine Voreinstellung des Dämpfungsgliedes (D) vornimmt, in Abhängigkeit vom in den Sende-Empfangsanlagen empfangenen Pegel des Sendesignals der Leitstelle.

5. Funknetz nach Anspruch 1 oder 2, dadurch gekennzeichnet, dass eine zweite Steuerschaltung (St2) eine Voreinstellung der Sendeleistung für die Senderichtung zur Leitstelle vornimmt, in Abhängigkeit vom in den Sende-Empfangsanlagen empfangenen Pegel des Sendesignals der Leitstelle (Fig. 1 und 2).

**Revendications**

1. Réseau hertzien comprenant un poste-pilote (Leit) et des postes secondaires, ainsi que deux ou plusieurs installations émettrices-réceptrices (petits postes-relais) (SE1 ... SEn), dont les émetteurs émettent sur la même – ou approximativement la même – fréquence et dont les récepteurs reçoivent une seconde fréquence, transmettent le signal de réception démodulé à l'émetteur en guise de modulation et manipulent l'émetteur en fonction de la tension de réception, caractérisé en ce que, dans les installations émettrices-réceptrices (SE1 ... SEn), un circuit de commande (St) contrôle la puissance d'émission, de telle manière que, lorsque le niveau de réception est élevé, la puissance d'émission rayonnée est aussi élevée et que, lorsque le niveau de réception est peu élevé, la puissance d'émission rayonnée est réduite; en ce que d'autre part des cellules d'amortissement réglables (D) sont insérées dans les lignes de communication allant de l'émetteur (S) au répartiteur de fréquences (W), cellules à l'aide desquelles est ajusté un amortissement inversément proportionnel à l'amortissement de propagation en direction du poste-pilote (Leit), amortissement déterminé par des mesures, de telle manière que, pour une pleine puissance d'émission, une tension de réception sensiblement égale est reçue dans le récepteur du poste-pilote (Leit) depuis tous les postes-relais (figure 1).

2. Réseau hertzien comprenant un poste-pilote (Leit) et des postes secondaires ainsi que plusieurs premières et secondes installations émettrices-réceptrices, qui sont connectées pour former ce qu'il est convenu d'appeler de «grands postes-relais» (SE1 ... SEn, SE1' ... SEn'), la disposition étant telle que les premières installations émettrices-réceptrices (SE1 ... SEn) fonctionnent, en vue de la liaison vers les postes secondaires, sur une seule paire de fréquences en duplex en exploitation à ondes communes, que les secondes installations émettrices-réceptrices (SE1' ... SEn') fonctionnent, en vue de la liaison vers le poste-pilote (Leit), sur une autre paire de fréquences unique en duplex en exploitation en ondes communes et que les récepteurs des premières installations émettrices-réceptrices (SE1 ... SEn) appliquent le signal de réception démodulé à l'émetteur correspondant des secondes installations émettrices-réceptrices (SE1' ... SEn') en guise de modulation et manipulent les émetteurs en fonction de la tension de réception, tandis que les récepteurs des secondes installations émettrices-réceptrices (SE1' ... SEn') manipulent de la même manière les émetteurs des premières installations émettrices-réceptrices (SE1 ... SEn), caractérisé en ce que les récepteurs des premières installations émettrices réceptrices (SE1 ... SEn) commandent, au moyen d'un circuit de commande (St), en fonction de leur niveau de réception, les émetteurs des secondes installations émettrices-réceptrices (SE1' ... SEn'), de telle manière qu'une faible tension de réception fournit une puissance d'emission peu élevée et qu'une tension de réception élevée fournit une puissance d'émission élevée, et d'autre part en ce que des cellules d'amortissement (D) sont insérées entre les secondes installations émettrices-réceptrices (SE1' ... SEn') et les répartiteurs correspondants (W), cellules à l'aide desquelles on ajuste un amortissement inversément proportionnel à l'amortissement de propagation en direction du poste-pilote, amortissement déterminé par des mesures, de telle manière que, pour la pleine tension d'émission, on obtient, dans le récepteur du poste-pilote (Leit), une tension de réception approximativement égale de la part de tous les postes-relais (figure 2).

3. Réseau hertzien suivant la revendication 1, caractérisé en ce qu'une cellule d'amortissement shuntable (DL) est insérée, dans le poste-pilote, entre l'émetteur et le répartiteur (figure 1).

4. Réseau hertzien suivant la revendication 1 ou 2, caractérisé en ce qu'un second circuit de commande effectue un préréglage de la cellule d'amortissement (D), en fonction du niveau, reçu dans les installations émettrices-réceptrices, du signal d'émission du poste-pilote.

5. Réseau hertzien suivant la revendication 1 ou 2, caractérisé en ce qu'un second circuit de commande (St2) effectue un préréglage de la puissance d'émission pour le sens d'émission vers le poste-pilote, en fonction du niveau, reçu dans les installations émettrices-réceptrices, du signal d'émission du poste-pilote. (figure 1 et 2.

**Claims**

1. Radio network with a master station (Leit) and with substations as well as with two or more transmit-receive installations (small relay stations) SE1 ... SEn), the transmitters of which transmit on the same or nearly the same frequency and the receivers of which receive a second frequency, feed the demodulated reception signal as modulation to the transmitter and key the transmitter in dependence on the reception voltage, characterised thereby, that a control circuit (St) in the transmit-receive installations (SE1 ... SEn) controls the transmission power in such a manner that a great transmission power is radiated in the case of high reception level and a small transmission power is radiated in the case of low reception level, that furthermore adjustable damping members (D) are built into the connecting lines from the transmitter (S) to the frequency separating filter (W), by which damping members (D) a damping inversely proportional to the path damping, determined by measurements, in direction of the master station (Leit) is set in such a manner that in the case of full transmission power, an about equally great reception voltage from all relay stations arises in the receiver of the master station (Leit) (Fig. 1).

2. Radio network with a master station (Leit) and with substations as well as with several first and second transmit-receive installations which are connected as so-called «large relay stations» (SE1 ... SEn, SE1' ... SEn'), wherein the first transmit-receive installations (SE1 ... SEn) operate in single-wave operation on a single duplex frequency pair for the connection to the substations, the second transmit-receive installations (SE1' ... SEn') operate in signle-wave operation on a further single duplex frequency pair fot the connection to the master station (Leit), wherein the receivers of the first transmit-receive installations (SE1 ... SEn) feed the demodulated reception signal as modulation to the respective transmitter of the second transmit-receive installations (SE1' ... SEn') and key the transmitters in dependence on the reception voltage as well as the receivers of the second transmit-receive installations (SE1' ... SEn') in like manner key the transmitters of the first transmit-receive installations (SE1 ... SEn), characterised thereby, that the receivers of the first transmit-receive installations (SE1 ... SEn) through a control circuit (St) control the transmitters of the second transmit-receive installations (SE1' ... SEn') in dependence on their reception level in such a manner that a small reception voltage results in a small transmission power and a great reception voltage results in a great transmission power and furthermore that damping members (D) are built in between the transmitters of the second transmit-receive installations (SE1' ... SEn') and the associated separating filters (W), by which damping members (D) a damping inversely proportional to the path damping, determined by measurements, in direction of the master station (Leit) is set in such a manner that in the case of full transmission power, an about equally great reception voltage from all relay stations arises in the receiver of the master station (Leit) (Fig. 2).

3. Radio network according to claim 1, characterised thereby, that a bridgeable damping member (DL) is connected between transmitter and separating filter in the master station (Fig. 1).

4. Radio network according to claim 1 or 2, characterised thereby, that a second control circuit undertakes a preliminary setting of the damping member (D) in dependence on the level of the transmitted signal of the master station received in the transmit-receive installations.

5. Radio network according to claim 1 or 2, characterised thereby, that a second control circuit (St2) undertakes a preliminary setting of the transmission power for the transmitting direction to the master station in dependence on the level of the transmitted signal of the master station received in the transmit-receive installations (Figs. 1 and 2).

FIG.1

FIG. 2